Europäisches Patentamt

European Patent Office

Office européen des brevets

(11) Veröffentlichungsnummer: **0 515 935 A2**

## EUROPÄISCHE PATENTANMELDUNG

(21) Anmeldenummer: **92108272.3**

(22) Anmeldetag: **15.05.92**

(51) Int. Cl.5: **G03B 1/58**

(30) Priorität: **28.05.91 DE 4117386**

(43) Veröffentlichungstag der Anmeldung:
**02.12.92 Patentblatt 92/49**

(84) Benannte Vertragsstaaten:
**DE FR GB**

(71) Anmelder: **Agfa-Gevaert AG**

**W-5090 Leverkusen 1(DE)**

(72) Erfinder: **Liermann, Traugott**
**Bussardstrasse 40**
**W-8025 Unterhaching(DE)**
Erfinder: **Nadler, Franz**
**Johannesweg 6**
**W-8041 Dietersheim(DE)**
Erfinder: **Risser, Jürgen, Dipl.-Ing.**
**Max-Anderl-Strasse 11**
**W-8056 Neufahrn(DE)**

(54) **Verfahren und Vorrichtung zum Erfassen des Filmanfangs eines aufgewickelten Films.**

(57) Ein Verfahren zum Abheben und Erfassen des Filmanfangs eines auf einem Wickel befindlichen Films, wobei der Filmanfang eine Abschlußkante aufweist, die in beliebiger Lage an der Mantelfläche des Wickels liegt, der Wickel durch ein an der Mantelfläche anliegendes Reibrad antreibbar ist, ein Trennkeil unter Vorspannung auf der Mantelfläche des Wickels aufliegt und dessen Schneide den Filmanfang vom Wickel abhebt, und eine Transportvorrichtung den abgehobenen Filmanfang einer nachfolgenden Mechanik zuführt, ist so ausgebildet, daß der Wickel (1, 1') zunächst entgegen der späteren Abspulrichtung und nach Erkennen der Lage der Filmabschlußkante (1c) in Abspulrichtung gedreht wird.

Fig.1

Die Erfindung betrifft ein Verfahren und eine Vorrichtung zum Abheben und Erfassen des Filmanfangs eines auf einem Wickel befindlichen Films nach dem Oberbegriff des Anspruchs 1.

Ein Verfahren und eine Vorrichtung dieser Gattung ist beispielsweise aus der US-PS 3,733,036 bekannt. Bei dem dort beschriebenen Gerät wird ein Trennkeil verwendet, der unter Vorspannung auf dem Wickel eines Rollfilms aufliegt. Der Wickel wird in der Abspulrichtung gedreht. Der Trennkeil reibt dabei über die äußere Mantelfläche des Filmwickels, greift unter die Abschlußkante am Filmanfang und löst so den Filmanfang vom Wickel. Nachteilig bei der bekannten Lösung ist, daß aufgrund der Reibungskräfte zwischen Filmoberfläche und Trennkeil die oberste Wickellage verschoben und der Film gelockert wird, wodurch eine Schlaufe entstehen kann. Dies kann dann dazu führen, daß der Trennkeil die Abschlußkante nicht erfaßt und ein automatisches Einfädeln nicht mehr möglich ist.

Der Erfindung liegt die Aufgabe zugrunde, ein Verfahren und eine Vorrichtung der genannten Art so auszubilden, daß die Gefahr einer Schlaufenbildung vermieden wird.

Die Aufgabe wird erfindungsgemäß durch die Merkmale des Hauptanspruchs 1 gelöst.

Die Erfindung macht sich dabei die Erkenntnis zunutze, daß die Gefahr, den Film durch den auf dem Wickel schleifenden Trennkeil zu lockern, umso geringer ist, je weniger weit der Trennkeil über den Wickel schleifen muß, bevor er an die Abschlußkante des Films stößt.

Erfindungsgemäß ist dabei vorgesehen, daß der Wickel zuerst entgegen der späteren Abspulrichtung gedreht wird. Der über den Film schleifende Trennkeil bewirkt dabei sogar ein gewisses Spannen des Wickels. Wenn der Trennkeil über die Abschlußkante schleift, gelangt er an eine Stufe, deren Höhe der Filmdicke entspricht. Diese Stufe wird von einem Sensor erkannt und daraufhin wird der Wickel gestoppt. Der Trennkeil steht nun in einem geringen Abstand von der Abschlußkante des Films entfernt. Nun wird der Wickel in Abspulrichtung gedreht und der Trennkeil muß nur eine kurze Strecke über den Film schleifen, bevor er an die Abschlußkante des Filmendes gelangt.

Es hat sich gezeigt, daß es für eine zuverlässige Funktion von Vorteil ist, den Filmwickel zunächst zu spannen, bevor mit dem eigentlichen Abheben und Erfassen des freien Endes, wie vorher beschrieben, begonnen wird. Dazu ist die Verwendung eines Reibrads, welches an der Mantelfläche des Wickels angreift, und eines Motors, der die Welle, auf welcher der Wickel sitzt, antreibt, vorgesehen. Das Reibrad und der Motor drehen den Wickel in entgegengesetzter Richtung an, was ein Spannen des Films auf dem Wickel bewirkt.

Die zu detektierende Stufe ist nur so hoch, wie ein Film stark ist. Die Stärke der Filme bewegt sich üblicherweise im Hundertstel-Millimeter-Bereich und dementsprechend schwierig ist es, diese Stufe zu erkennen. Es hat sich gezeigt, daß ein piezoelektrisches Meßelement, das am Trennkeil befestigt ist und dessen Meßspitze ebenfalls über den Wickel schleift, diese kleine Stufe gut erkennen kann.

Nachfolgend wird ein mögliches Ausführungsbeispiel anhand von Figuren näher erläutert.

Es zeigen:

Fig. 1     in teilweise vereinfachter Darstellung die Mechanik eines Gerätes, in welchem das erfindungsgemäße Verfahren zum Einsatz kommt,

Fig. 2     den Trennkeil mit dem Sensor in Detaildarstellung.

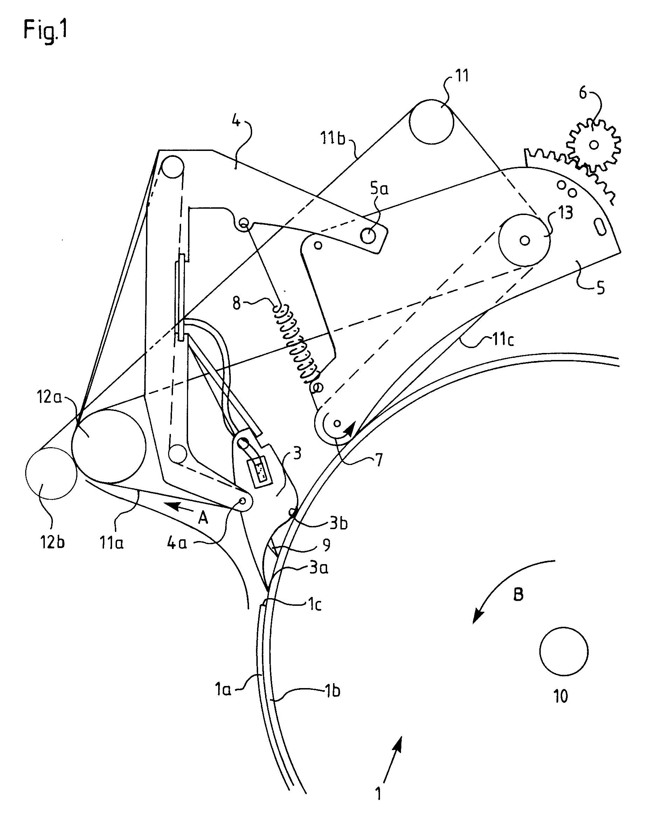

In Figur 1 sind die einzelnen Elemente der für das automatische Abheben und Erfassen des Filmanfangs notwendigen Mechanik dargestellt. Aus Gründen der besseren Erkennbarkeit ist der Filmwickel 1 überdimensioniert gezeichnet. Es sind nur die oberen beiden Lagen 1a und 1b des Filmwickels 1 genauer gezeichnet. Der Film hat eine Abschlußkante 1c, die an beliebiger Stelle der Mantelfläche des Filmwickels 1 anliegt. Auf dem Filmwickel 1 liegt ein Trennkeil 3 mit seiner Schneide 3a und einem Gleitteil 3b auf.

Der Trennkeil 3 ist an einem Hebel 4 um ein Lager 4a schwenkbar befestigt. Der Hebel 4 wiederum ist an einem Schwenkarm 5 um das Lager 5a drehbar befestigt. Ein Getriebe 6 bewegt den gesamten Schwenkarm 5 zusammen mit dem daran befestigten Hebel 4 und Trennkeil 3 aus einer hier nicht gezeigten Ruheposition, in welcher der Trennkeil 3 den Wickel 1 nicht berührt, in eine Arbeitsposition, in welcher der Trennkeil 3 und ein Reibrad 7 am Filmwickel aufliegen. Filmwickel mit unterschiedlichen Durchmessern werden einheitlich behandelt, bei kleineren Durchmessern wird der Schwenkarm entsprechend weiter bewegt. Über eine Feder 8 wird der Hebel 4 bezüglich des Schwenkarms 5 vorgespannt. Dies bewirkt einen definierten Anpreßdruck des Trennkeils 3 auf den Filmwickel 1. Der Trennkeil 3 kann sich aufgrund seines Drehlagers 4a immer gleichmäßig an den Filmwickel anlegen, auch wenn der Hebel 4 unter einem anderen Winkel steht.

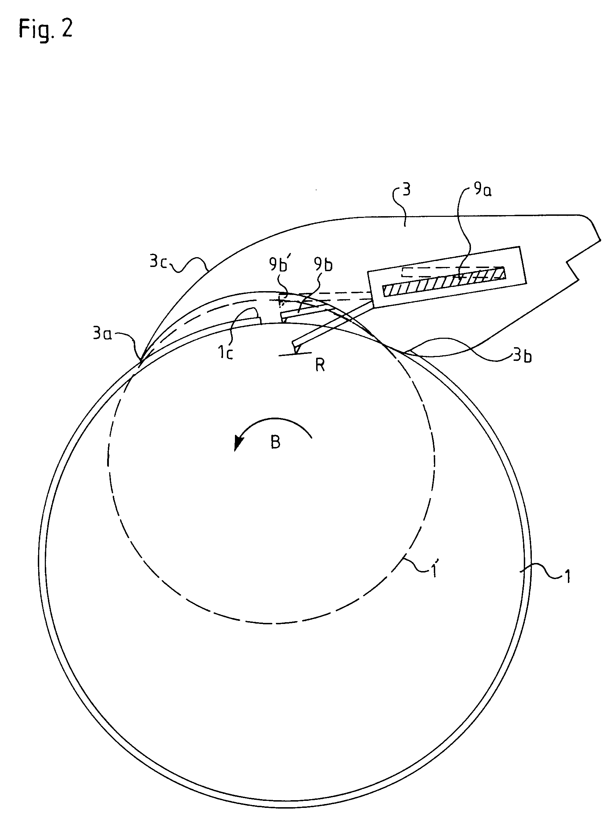

Im Trennkeil 3 untergebracht befindet sich ein Sensor 9, welcher die Mantelfläche des Filmwickels auf die Abschlußkante 1c abtastet. Der Trennkeil 3 und der Sensor 9 sind in Figur 2 genauer gezeigt.

Für den weiteren Transport des Films, nachdem er vom Wickel abgehoben wurde, sind mehrere nachfolgend beschriebene Riemen und Walzen vorgesehen. Zunächst gelangt der Filmanfang mit der Abschlußkante 1c an den endlosen Transportriemen 11a, der sich in Pfeilrichtung A bewegt und den Filmanfang in Richtung der beiden Transportwalzen 12a, 12b mitnimmt. Die beiden Transportwalzen 12a, 12b und der Transportriemen 11a werden über einen Antriebsriemen 11b bewegt. Der Transportriemen 11b läuft dabei, eine Umlenkrolle 13 und die Transportwalzen 12a, 12b umschlingend, weiter bis zum Riemenmotor 11. Auf der Umlenkrolle 13 läuft ein weiterer Riemen 11c, welcher das Reibrad 7 antreibt. Der Transportriemen 11a wird von der Transportwalze 12a angetrieben. Somit sind alle für den Transport des Films benötigten Elemente (Reibrad 7, Transportriemen 11a und Transportwalzen 12a, 12b) mechanisch gekoppelt und werden zentral vom Riemenmotor 11 angetrieben.

Es hat sich gezeigt, daß die Wickel durch äußere Einflüsse, z.B. Erschütterungen beim Transport oder bedingt durch die Steifigkeit des Films selbst, die Tendenz haben, lose zu werden. Daher ist es vorteilhaft, wenn vor dem eigentlichen Abheben und Erfassen des Filmanfangs der Wickel gespannt wird. Dies geschieht erfindungsgemäß, indem ein Motor 10 die den Wickel tragende Welle in Pfeilrichtung B dreht, während gleichzeitig das an der Mantelfläche des Wickels 1 anliegende Reibrad 7 stillsteht und dadurch die äußeren Lagen 1a, 1b des Wickels fixiert. Der Motor 10 kann nun den Wickel 1 solange drehen, bis der zwischen den einzelnen Lagen des Films befindliche Schlupf beseitigt ist und der Film einen straffen Wickel 1 bildet. Ebenso ist es möglich, den Filmwickel 1, 1' zusätzlich mit dem Reibrad 7 so anzutreiben, daß zwischen Kern und Mantel des Wickels 1, 1' eine Differenzgeschwindigkeit auftritt, wodurch der Film auf dem Wickel 1, 1' gespannt wird.

In Figur 2 sind Details des Trennkeils 3 und des darin befindlichen piezoelektrischen Meßelements 9 gezeigt. Auf die übrigen, vorher beschriebenen Elemente (Hebel 4 und Schwenkarm 5) wurde aus Gründen der besseren übersichtlichkeit verzichtet. Um den Einsatz des Trennkeils 3 bei Wickeln mit verschiedenen Durchmessern zu demonstrieren, ist neben dem Wickel 1 ein strichliniert gezeichneter Wickel 1' mit wesentlich geringerem Durchmesser dargestellt. In beiden Fällen liegt der Trennkeil 3 mit seiner Schneide 3a und dem Gleitteil 3b auf dem Wickel 1 bzw. 1' auf.

Der Sensor 9 besteht im wesentlichen aus einem Piezoplättchen 9a, und einer Tastspitze 9b. Der Sensor 9 ist federnd im Trennkeil 3 befestigt, in Ruhelage befindet sich die Spitze 9b in der Position R. Durch das Aufsetzen des Trennkeils 3 auf den Wickel 1 entsteht ein Biegemoment im Piezoplättchen 9a. Je kleiner der verwendete Wickel ist, desto weiter wird die Tastspitze 9b in den Trennkeil 3 gebogen. In der Zeichnung wird dies anhand des Wickels 1' und der Tastspitze 9b' - beide strichliniert gezeichnet - angedeutet.

Erfindungsgemäß wird der Wickel 1 bzw. 1' zuerst in Drehrichtung B bewegt. Die Tastspitze 9b, welche aufgrund ihrer elastischen Lagerung immer auf der Mantelfläche des Wickels 1, 1' aufliegt, folgt auch der Stufe an der Abschlußkante 1c des Films. Diese Bewegung der Tastspitze 9b erzeugt im Piezoplättchen 9a eine Spannung. Diese Spannung wird von einer nachgeschalteten, hier nicht gezeigten Elektronik ausgewertet und daraus der Filmanfang erkannt, worauf der Wickel 1 bzw. 1' abgebremst wird. Der Bremsweg des Wickels 1 bzw. 1' ist so bemessen, daß die Abschlußkante 1c, bezogen auf die Drehrichtung B hinter der Schneide 3a des Trennkeils 3 zu stehen kommt. Daraufhin wird die Drehrichtung des Wickels 1 bzw. 1' umgekehrt und die Schneide 3a des Trennkeils 3 greift unter die Abschlußkante 1c des Films und hebt den Filmanfang vom Wickel 1 bzw. 1' ab. Der Film gleitet dann über die gewölbte Außenfläche 3c des Trennkeils 3 in Richtung der hier nicht gezeigten, aber aus Figur 1 bekannten Transportwalzen 12a, 12b und des Transportriemens 11a.

## Patentansprüche

1. Verfahren zum Abheben und Erfassen des Filmanfangs eines auf einem Wickel befindlichen Films, wobei
   - der Filmanfang eine Abschlußkante aufweist, die in beliebiger Lage an der Mantelfläche des Wickels liegt,
   - der Wickel durch ein an der Mantelfläche anliegendes Reibrad antreibbar ist,
   - ein Trennkeil unter Vorspannung auf der Mantelfläche des Wickels aufliegt, und dessen Schneide den Filmanfang vom Wickel abhebt, und
   - eine Transportvorrichtung den abgehobenen Filmanfang einer nachfolgenden Mechanik zuführt, dadurch gekennzeichnet, daß der Wickel (1, 1') zunächst entgegen der späteren Abspulrichtung und nach Erkennen der Lage der Filmabschlußkante (1c) in Abspulrichtung gedreht wird.

2. Verfahren nach Anspruch 1, dadurch gekennzeichnet, daß ein die Welle, auf welcher der Filmwickel sitzt, antreibender Motor (10) den Filmwickel entgegen der Abspulrichtung antreibt und das an der Mantelflache des Wickels (1, 1') anliegende Reibrad (7) den Wickel (1, 1') so antreibt, daß zwischen Kern und Mantel des Wickels (1, 1') eine Differenzgeschwindigkeit auftritt, wodurch der Film (1a, 1b) auf dem Wickel gespannt wird.

3. Vorrichtung zum Durchführen des Verfahrens nach Anspruch 1, dadurch gekennzeichnet, daß am Trennkeil (3) ein Sensor (9) angebracht ist, der die Lage der Abschlußkante (1c) auf der Mantelfläche des Wickels (1, 1') erkennt.

4. Vorrichtung nach Anspruch 3, dadurch gekennzeichnet, daß der Sensor (9) ein piezoelektrisches Meßelement (9a) umfaßt.

5. Verfahren nach Anspruch 3 oder 4, dadurch gekennzeichnet, das piezoelektrische Meßelement (9a) auf Biegung belastet ist.

EP 0 515 935 A2

Fig.1

5

Fig. 2